Europäisches Patentamt

European Patent Office

Office européen des brevets

(19)

(11) Publication number: **0 206 734**
**A1**

# EUROPEAN PATENT APPLICATION

(12)

(21) Application number: **86304657.9**

(22) Date of filing: **17.06.86**

(51) Int. Cl.⁴: **F 16 H 3/10**

(30) Priority: **21.06.85 GB 8515745**
**21.06.85 GB 8515746**

(43) Date of publication of application: **30.12.86**
**Bulletin 86/52**

(84) Designated Contracting States: **DE FR GB IT**

(71) Applicant: **AUTOMOTIVE PRODUCTS PUBLIC LIMITED COMPANY, Tachbrook Road, Leamington Spa Warwickshire CV31 3ER (GB)**

(72) Inventor: **Bainbridge, Wilfred Nicholas, Staddle Stones Overthorpe, Banbury Oxfordshire (GB)**
Inventor: **Young, Alastair John, 39 Roundshill, Kenilworth Warwickshire (GB)**

(74) Representative: **Adkins, Michael et al, Withers & Rogers 4 Dyer's Buildings, Holborn London, EC1N 2JT (GB)**

(54) **A change speed transmission.**

(57) The change speed transmission includes gear trains which provide increasing speed ratios and two clutches (14, 15) which are operable independently and provide alternative drive paths through the gear trains between an input (12) and an output (48). The gear trains provide alternate ratios driven respectively through one and the other clutch and said input comprises a first input shaft (19) drivable by one clutch (14) and a second input shaft (22) drivable by the other clutch (15). A further shaft (36) is provided carrying gearing (35, 42, 43) in mesh with gearing (30, 32, 34) on said first and second input shafts (14, 15) and through which drive is transmitted to said output (48) in all ratios. Drive from one of said input shafts (14) to the output (48) in one ratio is transmitted through the other input shaft (15) via a unidirectional coupling (49).

ACTORUM AG

# A CHANGE SPEED TRANSMISSION

The invention relates to a change speed transmission including gear trains which provide increasing speed ratios and two clutches which are operable independently and provide alternative drive paths through the gear trains between an input and an output, the gear trains providing alternate ratios driven respectively through one and the other clutch, said input comprising a first input shaft drivable by one clutch and a second input shaft drivable by the other clutch, a further shaft being provided carrying gearing in mesh with gearing on said first and second input shafts and through which drive is transmitted to said output in all ratios.

With such transmissions, a smooth change from one ratio to another is dependent on the changeover from one clutch to another and careful clutch control, is necessary. An object of the present invention is to provide a transmission in which control of one of the clutches is less critical during a change from one ratio to another.

According to the invention there is provided a change speed transmission including gear trains which provide increasing speed ratios and two clutches which are operable independently and provide alternative drive paths through the gear trains between an input and an output, the gear trains providing alternate ratios driven respectively through one and the other clutch, said input comprising a first input shaft drivable by one clutch and a second input shaft drivable by the other clutch, a further shaft being provided carrying gearing in mesh with gearing on said first and second input shaft and through which drive is transmitted to said output in all ratios, drive from one said input shafts to the output in one ratio being transmitted through the other input shaft via a unidirectional coupling.

By using the unidirectional coupling the timing of disengagement of the clutch which drives said one input shaft in said one ratio is not critical when changing to the next ratio.

Preferably, said unidirectional coupling is arranged to transmit drive between gear wheels forming a transmission bridge between the first and second input shafts.

The said unidirectional coupling may transmit drive in first ratio and/or a reverse ratio.

Preferably, said unidirectional coupling freewheels in a ratio immediately adjacent a ratio in which drive is transmitted by the unidirectional coupling.

The unidirectional coupling may be arranged to transmit drive between a first gear on said further shaft and a second gear on the same shaft. In such a case the first gear may mesh with a gear on one of the first and second input shafts and the second gear may mesh with a gear on the other of the first and second input shafts.

Said unidirectional coupling may be arranged to couple a gear to a layshaft on which the gear is mounted to enable drive to be transmitted between said gear and said layshaft. The layshaft may carry a plurality of gears in mesh with respective gears on one of the first and second input shafts. One of said plurality of gears on said layshaft may be drivably connectable to the layshaft by said unidirectional coupling and the other selectively drivably connectable to said layshaft by selector means.

In order to fit gearboxes into restricted spaces in modern vehicles, it is desirable to keep the transmission as small as possible. With that in mind, a casing may be provided for gear trains with one of the first and second input shafts rotatably supported by a first bearing on a first portion of the casing, and the further shaft rotatably supported by a second bearing or a further portion of the casing, said first and second bearings being axially offset with a selector means arranged substantially alongside said first bearing, said selector means being arranged for selectively drivably connecting a gear to a member through which drive is to be transmitted.

Such an offset bearing arrangement and positioning of selector means helps to minimise the axial length of the transmission.

Preferably, the gear selectively connectable to said member meshes with a gear on said first input shaft.

Said selector means may be arranged immediately adjacent said second bearing.

Said portions of the casing may form parts of a wall of said casing between said gear trains and a clutch.

Preferably the input shafts are tubular and journalled one within the other with a drive shaft for transmitting drive to the clutches passing coaxially through them.

In certain cases, the transmission is connected to an engine with a flywheel of the engine arranged at one end of the transmission, the clutches at the opposite end of the transmission, and a drive shaft extending from the flywheel to drive the clutches.

In other cases, the clutches are arranged at opposite ends of the transmission.

The unidirection coupling may comprise a sprag clutch.

-4-

Transmissions in accordance with the invention will now be described
by way of example with reference to the accompanying drawings in
which:

Fig. 1 is a cross section of a first form of transmission in accordance
with the invention.

Fig. 2 is a schematic cross section generally on the line II-II

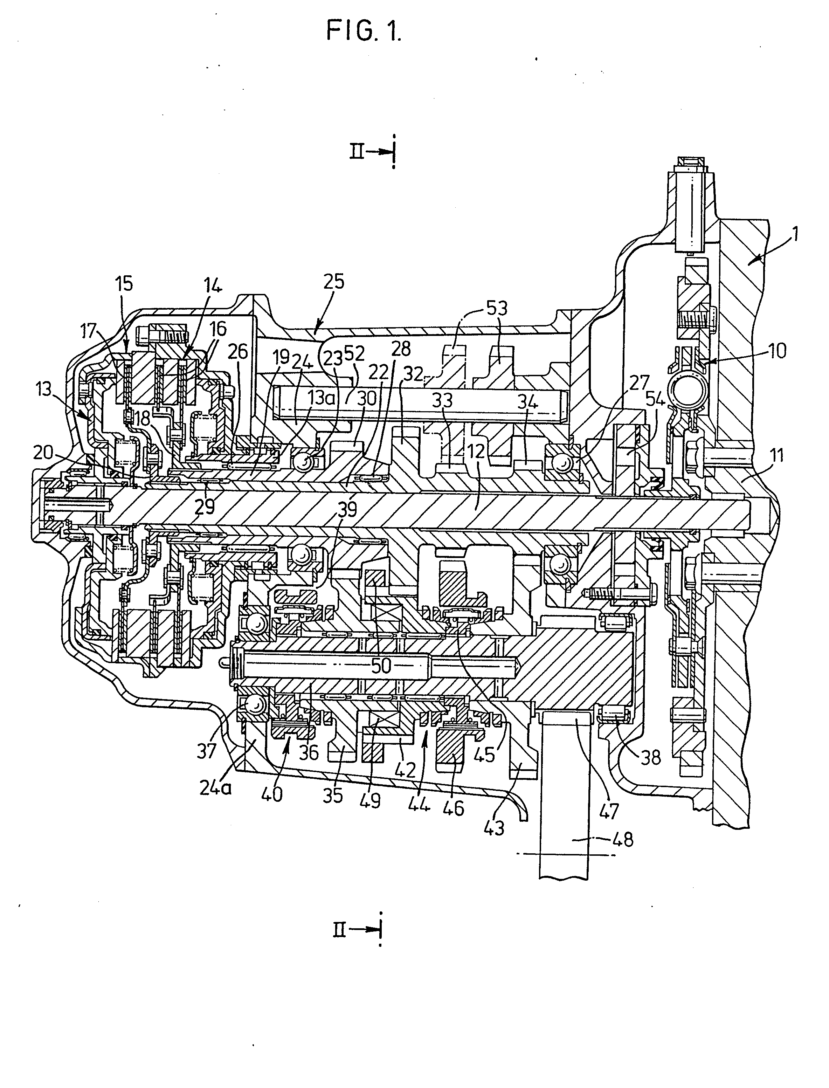

in Fig. 1 with the shafts repositioned,

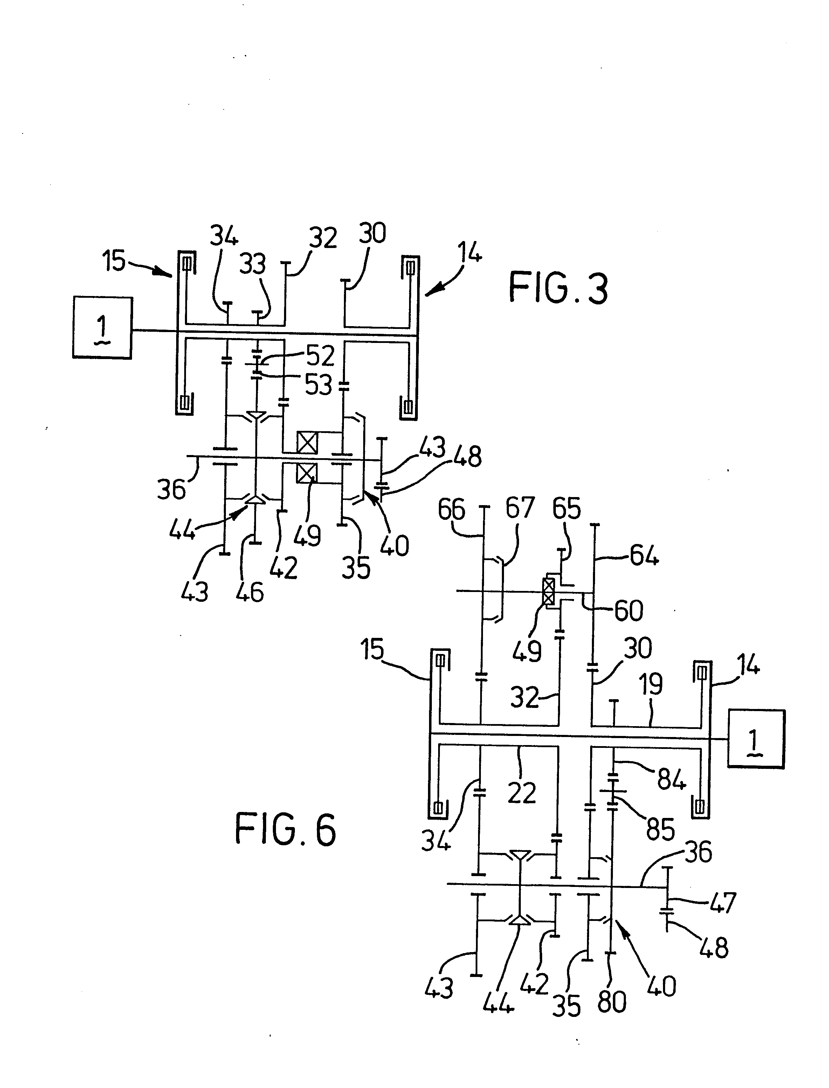

Fig. 3 is a schematic cross-section showing a second form of transmission in accordance with the invention.

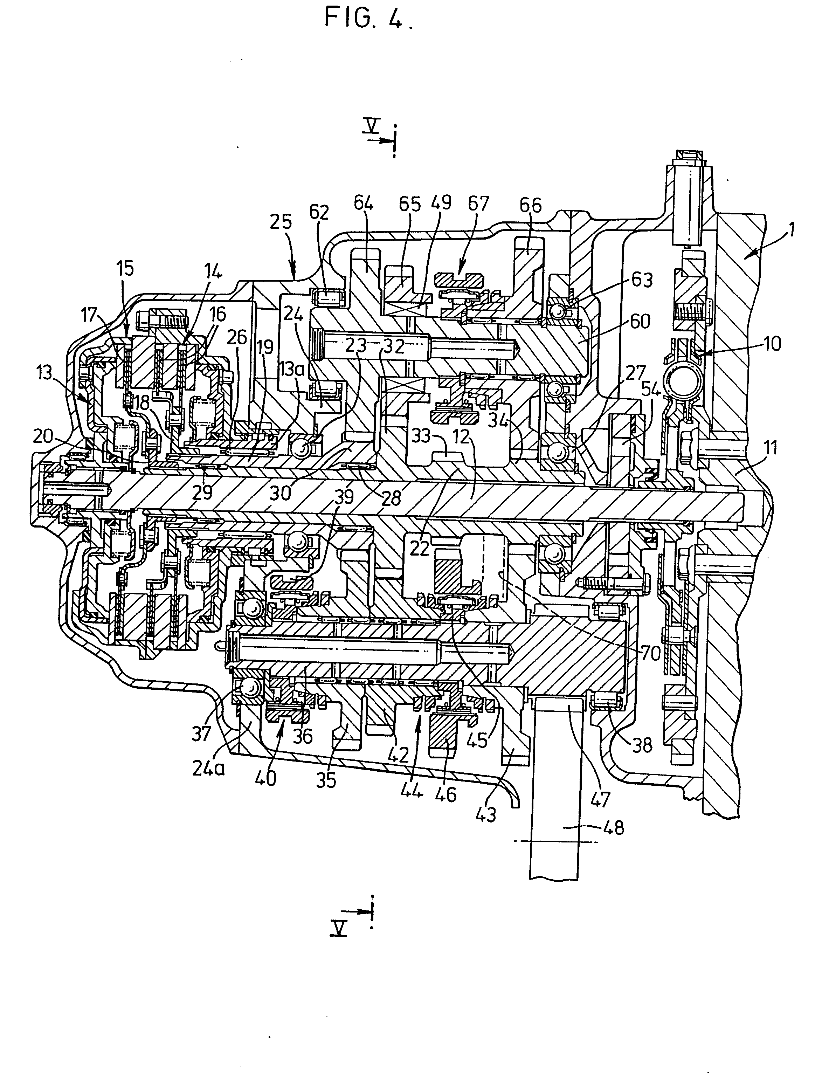

Fig. 4 is a cross section of a third form of transmission in accordance
with the invention,

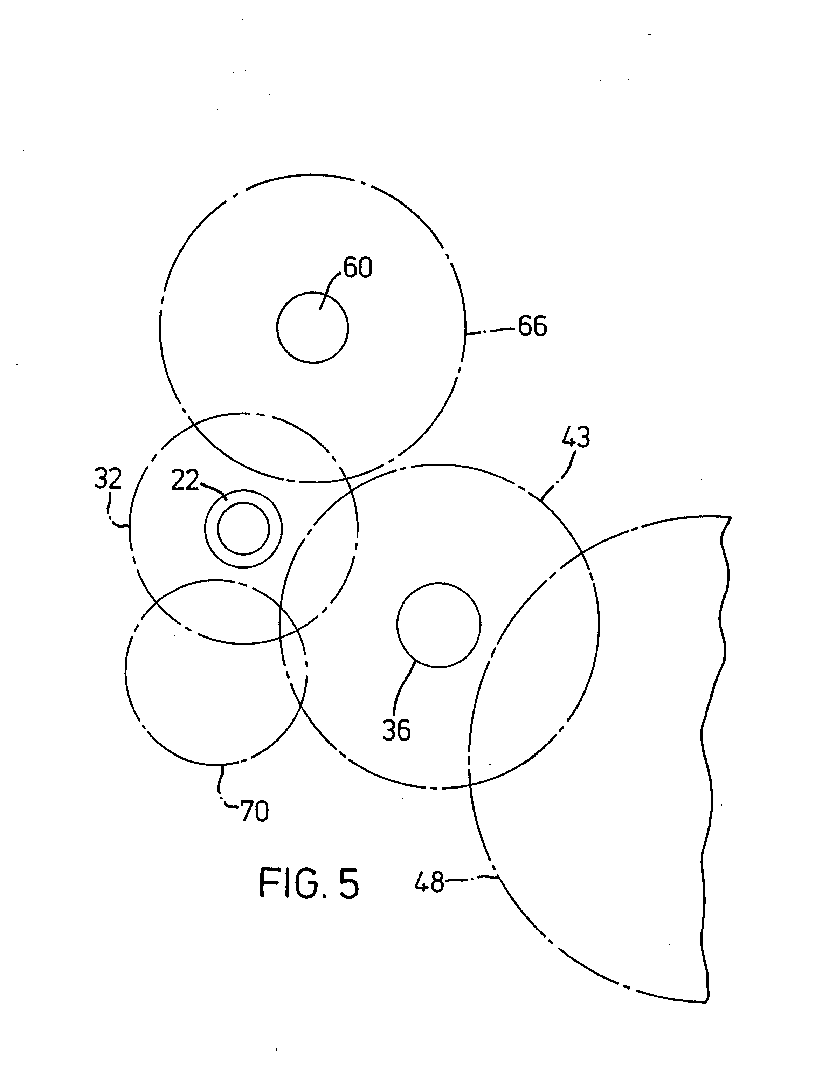

Fig. 5 is a schematic cross-section of the transmission of Fig.
4 on the line IV-IV in Fig. 4, and

Fig. 6 is schematic cross-section of a fourth form of transmission
in accordance with the invention.

In Fig. 1, a flywheel 10 rotatably fast with an output shaft 11
of an engine 1 providing a power input is splined to one end of
a drive shaft 12 (constituting the aforesaid input), the opposite
end of the drive shaft being splined to a housing 13 for first and
second independently operable clutches 14,15.  The housing 13 constitutes
a driving member for the clutches and the first clutch 14 includes
two driven plates 16 and the second clutch 15 includes a single
driven plate 17.  The driven plates 16 are carried by a common hub
18 splined to a tubular first input shaft 19 and the driven plate
17 is carried by a hub 20 splined to a tubular second input shaft
22.  The shafts 12, 19 and 22 are coaxial.  The transmission is
housed within a casing 25.

The first input shaft 19 is rotatably supported by a main bearing 23 having an outer race mounted on a portion of the casing in the form of a tubular extension 24. The first shaft 19 is also rotatably supported by needle roller bearings 26 positioned between the first shaft 19 and a cylindrical section 13a of the clutch housing 13.

The second input shaft 22 is rotatably supported by a main bearing 27 having an outer race supported by the casing 25. The shaft 22 is also supported by needle roller bearings 28,29 positioned between the shafts 19,22.

The first input shaft 19 is formed integrally with a gear wheel 30 and the second input shaft is formed integrally with three gear wheels 32, 33 and 34.

The gear wheel 30 meshes with a gear wheel 35 rotatably mounted on an output shaft 36. The output shaft 36 is rotatably supported at its ends by bearings 37, 38. The outer race of bearing 37 is mounted in a portion 24a of the casing 25. The main bearing 37 is offset axially to the left as viewed in Fig. 1 relative to the main bearing 23 which enables the transmission to be made in a compact manner so as to take up minimal space in the engine compartment of a vehicle. By positioning bearing 37 to the left of bearing 23, a space 39 is defined which can be occupied by a synchroniser assembly 40 for selectively drivably·connecting the gear wheel 35 to the output shaft 36. If the bearing 37 were arranged further to the right in the same plane as bearing 23, the synchroniser assembly 40 and gearing to the right thereof would effectively need to be shifted rightwards thereby increasing the overall length of the transmission. The casing portions 24, 24a together form an end wall of the casing separating the gearing of the transmission from the clutches 14,15.

The output shaft 36 rotatably supports two further gear wheels 42,43 which can be selectively drivably connected to the output shaft
by a synchronizer assembly 44 having a sliding selector sleeve on
a synchro hub 45 formed as a gear wheel 46. An output gear wheel
47 (constituting the aforesaid output) is formed at the right hand
end of the shaft which meshes with an input gear 48 of a differential
gearing (not shown).

A unidirectional clutch 49 is arranged to transmit drive in one
direction between the gear wheels 35,42 forming a transmission bridge
in that direction between input shafts 19 and 22. A reinforcing
ring 50 is secured around the periphery of gear wheel 42 to stiffen
the gear wheel in the region of the unidirectional clutch 49.

The gears 42,43 mesh respectively with gears 32,34.

A support shaft 42 is mounted on the casing 25 and slidably carries
a reverse gear wheel 53 which can be shifted by a fork (not shown)
along the support shaft from the full line position to the broken
line position to select reverse ratio.

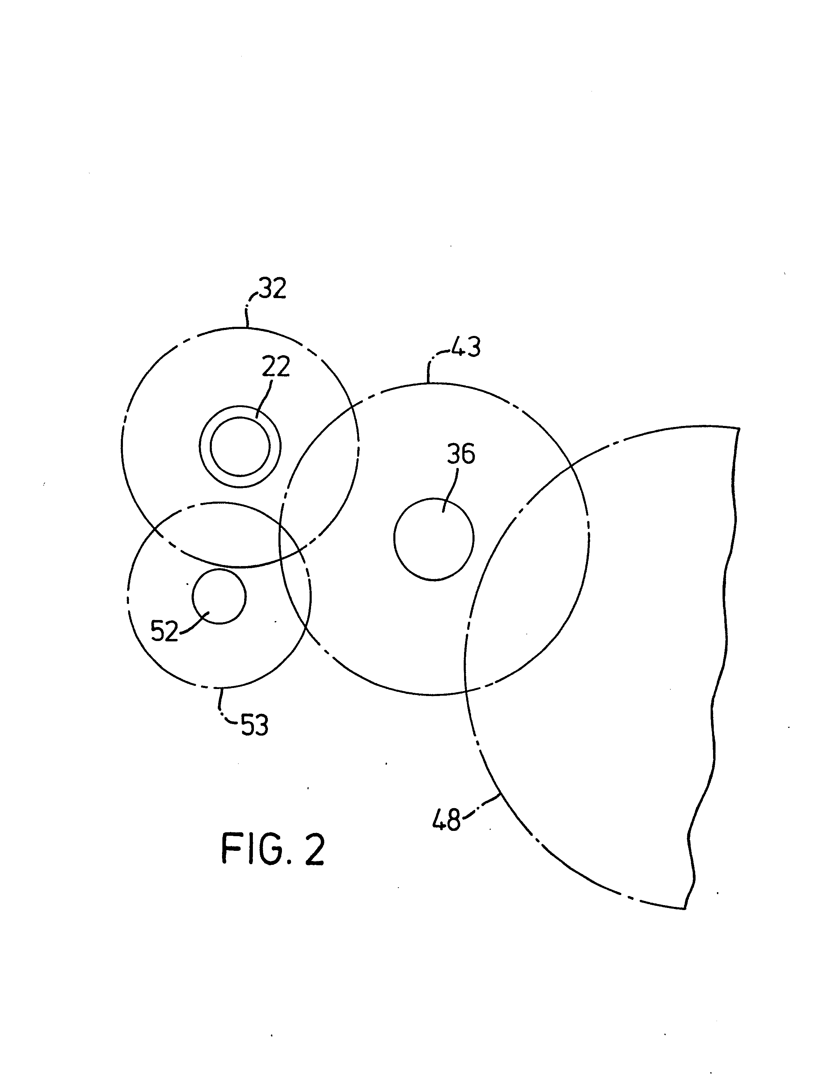

The shafts in Fig. 1 are shown in the same plane for simplicity
but in practice are arranged as shown schematically in Fig. 2 with
reverse gear wheel 53 in mesh with gear wheels 33,46 when in the
broken line position.

Selection of ratios may be controlled by any suitable means, e.g.
an automatic electro-hydraulic control system (not shown). A pump
54 may be provided for supplying fluid under pressure in such a
system. The selection of ratios will now be described.

With the engine running, both clutches 14,15 are intially disengaged
and the synchronizer assemblies 40, 45 are also disengaged.

To move off from rest in first ratio, synchro 44 is shifted to connect
gear 43 to the output shaft and clutch 14 is engaged. The output
shaft 36 is then driven through gears 30,35, unidirectional clutch 49, gears 42, 32 and gears 34,43.  The clutch plate 17 is driven idly by second input shaft 22.

To engage second ratio, the clutch 15 is engaged at the appropriate time and clutch 14 disengaged as dictated by the control system so as to drive the output shaft 36 through gear wheels 34,43.

To engage third ratio, clutch 14 is engaged and clutch 15 and synchro 44 are disengaged.  The output shaft 36 is then driven through gears 30,35.

To engage fourth ratio, the synchro 44 is shifted during drive in third ratio to connect gear 42 to the output shaft, clutch 15 is engaged and clutch 14 is disengaged so that the output shaft 36 is driven through gears 32,42.

To engage reverse ratio, the gear wheel 53 is shifted to the broken line position, clutch 15 is disengaged and clutch 14 is engaged so as to drive the output shaft in a reverse sense through gears 30,35; unidirectional clutch 49, gears 42, 32 and gears 33,53,46.

The presence of the unidirectional clutch 49 provides a free overrun of the vehicle in first and reverse ratios as the gear wheel 42 can overrun gear wheel 35.  In that way, the timing of the disengagement of the clutch 14 when changing from first ratio to second ratio is not critical.  Also load on the clutch 14 on vehicle overrun is minimised.

In Fig. 3 the transmission layout is very similar to that shown in Fig. 1 and corresponding components carry corresponding reference numerals.  Selection of the various ratios is identical to that described with respect to Fig. 1.  However, in Fig. 3 instead of having both clutches 14, 15 at one end of the transmission remote from the engine (indicated at  1) they are arranged at opposite ends of the transmission.  Clutches 14 and 15 are drivable from engine 1 through shaft 12.

Referring to Figs. 4 and 5 the arrangement of clutches 14,15, input shaft 19,22 and output shaft 36 is the same as that in Figs. 1 and 2 and parts corresponding to parts in Figs. 1 and 2 carry the same reference numerals. However, in place of support shaft 52, a layshaft 60 is rotatably supported in bearings 62,63 and the casing 25. The layshaft 60 is formed integrally with a gear wheel 64 at its left hand end and rotatably carries two further gear wheels 65,66 which are selectively drivably connectable to the layshaft 60 by synchronizer assembly 67. The gear wheel 64 meshes with gear wheel 30, the gear wheel 65 meshes with gear wheel 32 and the gear wheel 66 meshes with the gear wheel 34. A sliding lay gear 70 is provided which can be shifted to mesh with gear 33 and gear 46 for selection of reverse ratio.

In Fig. 4 the shafts are shown in the same plane but in practice will be arranged generally as in Fig. 5.

Selection of ratios is as follows and may be controlled by any suitable means, e.g. an electro-hydraulic control system. As in Fig. 1, a pump 54 may be provided for supplying fluid under pressure in such a system.

To move off from rest in first ratio, synchro 44 is shifted to connect gear 43 to the output shaft 36 and clutch 14 is engaged. Output shaft 36 is then driven through gears 30,64, unidirectional clutch 49, gears 65,32 and gears 34,43. Clutch 15 is not engaged in first ratio.

To engage second ratio, clutch 15 is engaged at the appropriate time and clutch 14 is disengaged as dictated by the the control system so as to drive output shaft 36 through gears 34,43.

To engage third ratio, the synchro 40 is shifted during drive in second ratio to connect gear 35 to the output shaft 36. Clutch 14 is then engaged and clutch 15 disengaged to drive the output shaft through gears 30,35.

To engage fourth ratio, the synchro 44 is shifted during drive in third ratio to connect gear 42 to the output shaft. Clutch 15 is engaged and clutch 14 is disengaged to drive the output shaft 36 through gears 32,42.

To engage fifth ratio, the gear 66 is connected to layshaft 60 by synchro 67 during drive in fourth ratio. Clutch 14 is engaged and clutch 15 is disengaged so as to drive the output shaft 36 through gears 30,64;66,34 and 32,42.

To select reverse ratio, the lay gear 70 is shifted to mesh with gears 33,46, clutch 14 is engaged and clutch 15 is disengaged so as to drive the output shaft in a reverse sense through gears 30,64; unidirectional clutch 49, gears 65,32; 33,70 and 46.

The presence of the unidirectional clutch 49 provides a free overrun of the vehicle in first and reverse ratios as the gear wheel 65 can overrun the layshaft 60 gear wheel 35. In that way, the timing of the disengagement of the clutch 14 when changing from first ratio to second ratio is not critical. Also load on the clutch 14 on vehicle overrun is minimised.

Reference is now made to Fig. 6 in which parts corresponding to parts in Figs. 1 to 5 carry the same reference numerals.

The first input shaft is driven by clutch 14 and has a gear 30 integral therewith meshing with gear 64 on layshaft 60 and meshing with gear 35 on output shaft 36. The gear 35 is selectively drivably connectable to output shaft 36 by synchronizer assembly 40, the selector sleeve of which carries a gear wheel 80.

The layshaft 60 carries gear wheels 65,66. The gear wheel 65 is drivably connectable to the layshaft 60 by a unidirectional clutch 49. The gear wheel 66 is selectively rotatably connectable to the layshaft 60 by a synchronizer assembly 67.

The output shaft 36 carries gear wheels 42,43 which are selectively drivably connectable to the output shaft by synchronizer assembly 44.

The second input shaft 22 drivable by clutch 15 has gear wheels 32,34 integral therewith in mesh respectively with gear wheels 42,65 and 43,66.

Clutches 14 and 15 are arranged at opposite ends of the transmission and are drivable from engine 1 through shaft 12.

The first input shaft 19 is rotatably fast with a gear wheel 84 and a sliding lay gear 85 can be moved axially into mesh with gear wheels 80,83 for selection of reverse ratio.

Selection of ratios is as follows.

To move off in first ratio, synchro 44 is shifted to connnect gear 43 to output shaft 36 and clutch 14 is engaged. The output shaft is then driven from clutch 14 through gears 30,64; unidirectional clutch 49 gears 65,32 and gears 34,43. Clutch 15 is not engaged in first ratio.

To engage second ratio, clutch 15 is engaged and the clutch 14 is disengaged as directed by a suitable control system so as to drive the output shaft 36 through gears 34,43. As in Fig. 4 unidirectional clutch 49 allows gear wheel 65 to overrun layshaft 60. Therefore, control of the off-going clutch 14 is not critical when changing from first to second ratio, the unidirectional clutch 49 preventing transmission of torque from clutch 15 to clutch 14.

To engage third ratio synchro 40 is shifted during drive in second ratio to connect gear 35 to the output shaft. Clutch 14 is engaged and clutch 15 is disengaged so that the output shaft 36 is driven through gears 30,35.

## CLAIMS

1. A change speed transmission including gear trains which provide increasing speed ratios and two clutches (14,15) which are operable independently and provide alternative drive paths through the gear trains between an input (12) and an output (48), the gear trains providing alternate ratios driven respectively through one and the other clutch, said input comprising a first input shaft (19) drivable by one clutch (14) and a second input shaft (22) drivable by the other clutch (15), a further shaft (36) being provided carrying gearing (35,42,43) in mesh with gearing (30,32,34) on said first and second input shafts (14,15) and through which drive is transmitted to said output (48) in all ratios, characterised in that drive from one of said input shafts (14) to the output (48) in one ratio is transmitted through the other input shaft (15) via a unidirectional coupling (49).

2. A change speed transmission according to Claim 1 characterised in that said unidirectional coupling (49) is arranged to transmit drive between gear wheels (35,42; 64,65) forming a transmission bridge between the first and second input shafts (19,22).

3. A change speed transmission according to Claim 1 or 2 characterised in that said unidirectional coupling (49) transmits drive in first ratio.

4. A change speed transmission according to any preceding claim characterised in that said unidirectional coupling (49) transmits drive in a reverse ratio.

5. A change speed transmission according to any preceding claim characterised in that said unidirectional coupling (49) freewheels in a ratio immediately adjacent a ratio in which drive is transmitted by the unidirectional coupling.

-11-

To engage fourth ratio, the syncro 44 is shifted during drive in third ratio to disengage gear 43 and connect gear 42 to the output shaft 36. The clutch 15 is engaged, clutch 14 disengaged and the output shaft is driven through gears 32,42.

To engage fifth ratio, the synchro 67 is shifted during drive in fourth ratio to connect gear 66 to layshaft 60. Clutch 14 is then engaged, clutch 15 disengaged and the output shaft is driven through gears 30,64; 66,34 and 32,42.

To engage reverse ratio the lay gear 85 is slid into mesh with gears 80,84 and clutch 14 is engaged so as to drive the layshaft in a reverse sense through gears 84,85 and 80. As an alternative gear 84 could be mounted on shaft 22 to drive synchro 44 via a lay gear as in Fig. 4.

The unidirectional clutch 49 may comprise a sprag-type clutch.

0206734

-2-

6. A change speed transmission according to any preceding claim characterised in that the unidirectional coupling (49) is arranged to transmit drive between a first gear (35) on said further shaft (36) and a second gear (42) on the same shaft.

7. A change speed transmission according to Claim 6 characterised in that the first gear (35) meshes with a gear (30) on one (19) of the first and second input shafts and the second gear (42) meshes with a gear (32) on the other (22) of the first and second input shafts.

8. A change speed transmission according to any of Claims 1 to 5 characterised in that said unidirectional coupling (49) is arranged to couple a gear (65) to a layshaft (60) on which the gear is mounted to enable drive to be transmitted between said gear and said layshaft.

9. A change speed transmission according to Claim 8 characterised in that said layshaft (60) carries a plurality of gears (65,66) in mesh with respective gears (32,34) on one (22) of the first and second input shafts.

10. A change speed transmission according to Claim 9 characterised in that one (65) of said plurality of gears on said layshaft (60) is drivably connectable to the layshaft by said unidirectional coupling (49) and the other (66) is selectively drivably connectable to said layshaft by selector means (67).

11. A change speed transmission according to any preceding claim characterised in that a casing (25) is provided for the gear trains, one of the first and second input shafts (19) is rotatably supported by a first bearing (23) on a first portion (24) of the casing, and the further shaft (36) is rotatably supported by a second bearing (37) on a further portion (24a) of the casing (25), said first and second bearings being axially offset with a selector means (40) arranged substantially alongside said first bearing (23), said selector means being arranged for selectively

0206734

-3-

drivably connecting a gear (35) to a member (36) through which drive is to be transmitted.

12. A change speed transmission according to Claim 11 characterised in that the gear (35) selectively connectable to said member (36) meshes with a gear (30) on said first input shaft (19).

13. A change speed transmission according to Claim 11 or 12 characterised in that said selector means (40) is arranged immediately adjacent said second bearing (37).

14. A change speed transmission according to Claim 11, 12 or 13 characterised in that said portions (24,24a) of the casing (25) form parts of a wall of said casing between said gear trains and a clutch (14,15).

15. A change speed transmission according to any preceding claim characterised in that the input shafts (19,22) are tubular and journalled one within the other with a drive shaft (12) for transmitting drive to the clutches (14,15) passing coaxially through them.

15. A change speed transmission according to Claim 14 characterised in that said portions of the casing (25) form parts of a wall of said casing between said gear trains and a clutch (14,15).

16. A change speed transmission according to any preceding claim characterised in that the transmission is connected to an engine (1) with a flywheel (10) of the engine arranged at one end of the transmission the clutches (14,15) at the opposite end of the transmission, and a drive shaft (12) extending from the flywheel to drive the clutches

17. A change speed transmission according to any of Claims 1 to 15 in which the clutches (14,15) are arranged at opposite ends of the transmission.

FIG. 1.

0206734

2/5

0206734

FIG. 2

FIG.3

FIG.6

FIG. 4.

4/5

0206734

FIG. 5

0206734

**European Patent Office**

## EUROPEAN SEARCH REPORT

Application number

| **DOCUMENTS CONSIDERED TO BE RELEVANT** | EP 86304657.9 |
| --- | --- |

| Category | Citation of document with indication, where appropriate, of relevant passages | Relevant to claim | CLASSIFICATION OF THE APPLICATION (Int. Cl.4) |
| --- | --- | --- | --- |
| A | US - A - 2 466 318 (KOHR)<br>* Totality * | 1-10, 15 | F 16 H 3/10 |
| A | US - A - 2 733 613 (KREIS)<br>* Totality * | 1-10, 15 | |
| A | US - A - 4 461 188 (FISHER)<br>* Totality * | 1-10, 15 | |
| A | US - A - 4 463 621 (FISHER)<br>* Totality * | 1-10, 15 | |
| A | GB - A - 2 021 215 (EATON CORPN.)<br>* Fig. 1,2 * | 11,14, 16 | |
| A | EP - A2 - 0 061 903 (AUTOMOTIVE PRODUCTS)<br>* Totality * | 18 | **TECHNICAL FIELDS SEARCHED (Int. Cl.4)**<br><br>F 16 H 3/00<br>F 16 H 37/00 |
| A | EP - A1 - 0 090 674 (NISSAN)<br>* Totality * | 18 | |
| A | FR - A - 1 013 975 (DAIMLER-BENZ)<br>* Totality * | | |
| A | FR - A - 1 469 727 (BOSCH)<br>* Totality * | | |

The present search report has been drawn up for all claims

| Place of search | Date of completion of the search | Examiner |
| --- | --- | --- |
| VIENNA | 10-09-1986 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82